# EUROPÄISCHE PATENTANMELDUNG

(11) **EP 1 715 227 A1**
(43) Veröffentlichungstag der Anmeldung: **25.10.2006**
(21) Anmeldenummer: 06101417.1
(22) Anmeldetag: 08.02.2006
(51) Int. Cl.: F16K 3/10, F16K 3/06, F02D 9/10

(54) **Ventileinheit**

(30) Priorität: 18.04.2005 DE 202005006235 U
(71) Anmelder: MANN+HUMMEL GmbH, 71638 Ludwigsburg (DE)
(72) Erfinder: Hummel, Karl-Ernst, 74321 Bietigheim-Bissingen (DE); Wild, Stephan, 75305 Neuenbürg (DE); Schick, Hedwig, 71634 Ludwigsburg (DE)

(57) **Zusammenfassung**

Ventileinheit (10) zum Verschließen eines Strömungsquerschnittes (17), insbesondere eines Sekundärluftladers, aufweisend eine Gehäuseanordnung (18,19), in welcher der Strömungsquerschnitt (17) durch eine schwenkbare Blende (16) verschließbar ist und eine Rotationsachse (21), welche annähernd parallel zum Strömungsquerschnitt (17) in der Gehäuseanordnung (18,19) angeordnet ist. Die Rotationsachse (21) weist Mittel (12,13) zur Verbindung mit einer Antriebseinheit (11) auf, wobei die schwenkbare Blende (16) mit der Rotationsachse (21) derart verbunden ist, dass die Blende (16) durch die Rotation der Rotationsachse (21) über den Strömungsquerschnitt (17) geschwenkt wird und diesen verschließt. Im Bereich des Strömungsquerschnittes (17) ist wenigstens ein Dichtmittel (22) angeordnet, welches mit der Blende (16) derart korrespondiert, dass das Dichtmittel (22) in einem geschlossenen Zustand der Ventileinheit (10) in Berührung mit einer Seite der Blende (16) ist wodurch eine Dichtfläche (32a) entsteht.

## Beschreibung

### Technisches Gebiet

Die Erfindung betrifft eine Ventileinheit zum Verschließen eines Strömungsquerschnittes gemäß des Oberbegriffs des Patentanspruches 1. Ventileinheiten dieser Art werden überwiegend dort eingesetzt, wo ein schneller Verschluss eines Strömungsquerschnittes erforderlich ist und nur ein begrenzter Einbauraum zur Verfügung steht. Weiterhin wird in diesem Fall die Anforderung gestellt, dass die Ventileinheit in geöffnetem Zustand keinen erhöhten Strömungswiderstand verursacht. Typische Einsatzmöglichkeiten ergeben sich im Umfeld von Verbrennungsmotoren, wie beispielsweise im Ansaugtrakt, im Abgastrakt oder im Kühl- oder Heizkreislauf. Eine weitere Anwendung ist die Verwendung zur Zu- oder Abschaltung eines Massenstromes mit einem Sekundärluftlader.

### Stand der Technik

Es ist beispielsweise aus der EP 0 106 484 eine Ventileinheit bekannt, die in einem Gehäuse integriert ist. Innerhalb dieses Gehäuses sind ein Strömungsquerschnitt und eine Achse parallel zueinander angeordnet. Zum Verschließen des Strömungsquerschnittes wird eine Blende, welche durch einen Bügel auf der Achse gelagert ist, in den Strömungsquerschnitt geschwenkt, so dass dieser vollständig von der Blende verdeckt ist. Die Blende besteht aus zwei gleichförmigen Hälften, die jeweils einer Strömungsrichtung zugewandt sind. Zur Bildung einer elastischen Lagerung sind die beiden Hälften durch Federn gegeneinander gespreizt. Dadurch bildet sich auf beiden Strömungsseiten jeweils eine Anlagefläche mit dem Gehäuse, die eine dichte Verbindung herstellen soll. Nachteilig hierbei ist der mechanisch hohe Aufwand, der eine Vielzahl von Einzelteilen benötigt. Weiterhin ist beim Einschwenken der Blende in den Strömungsquerschnitt das Reibmoment zwischen den Dichtflächen und der Anlagefläche des Gehäuses zu überwinden. Dies verursacht eine hohe Betätigungskraft der Ventileinheit. Aufgabe der Erfindung ist es, oben genannte Nachteile zu vermeiden und eine Ventileinheit zu schaffen, welche aus einer minimierten Anzahl von einfach herzustellenden Bauteilen besteht, einfach montierbar ist, eine geringe Betätigungskraft benötigt und in beengten Einbauräumen eingesetzt werden kann. Diese Aufgabe wird durch die Merkmale des Patentanspruches 1 gelöst.

### Offenbarung der Erfindung

Die erfindungsgemäße Ventileinheit dient zum Verschluss eines Volumenstromes in einem Strömungsquerschnitt. Ein bevorzugter Einsatzbereich ist ein Leitungssystem zwischen einem Sekundärluftlader und dem Ansaugtrakt eines Verbrennungsmotors. Generell können alle flüssigen oder gasförmigen Fluidströmungen mit der Ventileinheit geschaltet werden. Zum Verschließen des Strömungsquerschnittes wird eine im Wesentlichen planförmige Blende in eine schlitzförmige Kammer des Strömungsquerschnittes eingeschwenkt. Diese Kammer ist im Wesentlichen rechtwinklig zum Strömungsquerschnitt und unterbricht dessen Wandungen. Die Blende ist mit einer Rotationsachse verbunden und wird durch deren Rotation in die schlitzförmige Kammer eingeschwenkt. Der Strömungsquerschnitt wird somit von der Blende durchschnitten, wodurch sich zwischen den Wandungen und der Blende eine Dichtfläche bildet. Die Blende ist in ihren Abmessungen derart gestaltet, dass innerhalb der Kammer zwischen Blende und den Wandungen ein in Strömungsrichtung axialer Spalt entsteht. Die Blende weist dabei eine Beweglichkeit auf, die ein Anliegen an der Dichtfläche der Wandung erlaubt. In geschlossener Stellung der Ventileinheit wird die Blende durch den Volumenstrom bzw. durch einen Staudruck gegen die Dichtfläche gedrückt. Zur Optimierung der Dichtwirkung sind an der Wandung oder im Bereich konzentrisch zum Strömungsquerschnitt Dichtmittel angeordnet. Diese Dichtmittel können beispielsweise durch eine Elastomerbeschichtung oder durch eingefügte elastische Formteile gebildet werden. Alternativ kann die Blende selbst aus einem elastischen Material gebildet werden. Die gesamte Anordnung ist vorzugsweise in einem mehrteiligen Gehäuse untergebracht, welches im Wesentlichen aus zwei Gehäusehälften gebildet ist, welche den Strömungsquerschnitt aufnehmen. Weiterhin ist im Gehäuse vorzugsweise auch eine Aufnahme zur Lagerung und Abdichtung der Rotationswelle vorgesehen. Zweckmäßigerweise werden die beiden Gehäusehälften nach der Montage der einzelnen Elemente, wie Blende und Rotationswelle, durch Verbindungselemente miteinander dichtend befestigt. Als Material können für alle Gehäuseteile sowie für die Blende und die Rotationsachse Kunststoffe wie beispielsweise Polyamid oder Leichtmetalle wie Aluminiumlegierungen verwendet werden. Ein wesentlicher Vorteil dieser Ventileinheit erlaubt es, dass die wesentlichen Bauteile im Spritzgussverfahren hergestellt werden können. Die unkomplizierte Gestaltung erlaubt es beispielsweise auch, die Blende einstückig mit der Rotationsachse herzustellen und die Rotationsachse beweglich im Gehäuse zu lagern. Die schnelle und leichtgängige Betätigung der Blende wird dadurch erreicht, dass das Reibmoment zwischen Blende und Dichtfläche erst dann ansteigt, wenn die Blende den Strömungsquerschnitt überdeckt. Ein Anpressdruck auf die Dichtfläche ist somit abhängig vom Schwenkungswinkel der Blende. Dies beschleunigt die Schaltzeit sowohl beim Öffnen als auch beim Schließen des Strömungsquerschnittes. Somit ist die erfindungsgemäße Ventileinheit einfach und wirtschaftlich herstellbar, benötigt nur einen minimalen Einbauraum und erlaubt es, sehr schnelle Schaltzeiten zu realisieren. In geöffnetem Zustand steht der volle Strömungsquerschnitt zur Verfügung.

In einer Weiterentwicklung der Erfindung sind an beiden Strömungsseiten der Blende Dichtmittel vorgesehen. Dadurch kann die Ventileinheit den Strömungsquerschnitt auch im Lastwechselfall dichtend verschließen. Dies tritt beispielsweise beim Einsatz eines Sekundärluftladers in einem durch Abgasturbolader aufgeladenen Motor auf. Die geschlossene Blende wird im Saugbetrieb des Motors an eine Dichtfläche auf Seite des Saugrohres angesaugt bzw. durch den Atmosphärendruck angedrückt. Sobald der Abgasturbolader einsetzt, entsteht im Saugrohr ein Überdruck und die Blende wird an die entgegengesetzte Dichtfläche auf der Seite des Sekundärluftladers gedrückt. Durch diese Anordnung ist die Ventileinheit in der Lage, eine Dichtheit bei wechselnden, entgegengesetzten Strömungsrichtungen bzw. Druckverhältnissen herzustellen. Dieses ermöglicht den Einsatz der Ventileinheit insbesondere zwischen der Turbinenseite eines Sekundärluftladers und einem Saugrohr. Die in diesem Anwendungsfall geforderte beidseitige Dichtheit in Verbindung mit den kurzen Schaltzeiten kann durch die beschriebene Ausgestaltung vorteilhaft erreicht werden.

Gemäß einer weiteren Ausgestaltung der Erfindung ist das Dichtmittel ein aus einem Elastomer gebildeter Dichtring. Dieser kann an der Blende oder an der Wandung des Strömungsquerschnittes eingefügt, angeklebt oder nach einem anderen aus dem Stand der Technik bekannten Befestigungsverfahren angebracht sein. Durch den Dichtring entsteht zwischen Blende und Wandung eine elastische Anlagefläche, welche mögliche Toleranzen oder Unebenheiten überbrückt und somit die Dichtheit optimiert. Weiterhin werden mögliche Vibrationen gedämpft, wodurch der Verschleiß minimiert wird und eine geräuscharme Funktion gewährleistet ist.

Eine weiterentwickelte Variante der Erfindung sieht vor, den Dichtring in eine Nut einzupassen, welche den Strömungsquerschnitt im Wesentlichen konzentrisch umschließt. Vorzugsweise ist diese Nut in der Wandung bzw. in einem erweiterten Wandungsbereich des Strömungsquerschnittes eingeformt. Es ist jedoch auch möglich, die Nut an der Blende anzuordnen. In der Nut können beispielsweise Verengungen eingeformt sein, welche den elastischen Ring fixieren. Alternativ kann dieser auch eingeklebt sein. Somit ist der Ring formschlüssig und sichtbar befestigt und kann einfach montiert und demontiert werden.

Gemäß einer weiteren Ausführung ist zumindest an einer Seite der Dichtfläche eine reibungsmindernde Oberfläche oder eine reibungsmindernde Lage angeordnet. Dies kann beispielsweise eine Teflondichtung sein, die als dünne Schicht auf einem Elastomer oder auf einer starren Oberfläche angebracht ist. Aufgrund von möglicherweise im Ansaugtrakt vorhandenen Blow-By-Gasen kann auch ein Elastomer verwendet werden, welches unter Einwirkung von Blow-By-Gasen nicht aufquillt. Um eine Kombination von Elastizität und verminderter Reibung zu erreichen, können auch mehrere Dichtringe übereinander angeordnet sein. Um die Dichtringe miteinander zu verbinden, können diese Absätze oder Nuten aufweisen, die miteinander im Eingriff sind. Dadurch werden die Reibung und die Schaltzeit beim Schwenken der Blende vorteilhaft reduziert, ohne die Elastizität der Dichtung wesentlich zu beeinträchtigen.

In einer weiteren vorteilhaften Ausgestaltung ist die Blende gegenüber der Strömungsrichtung axial beweglich. Hierzu kann die Blende beispielsweise auf der Rotationswelle axial verschiebbar gelagert werden. Eine derartige Verschiebbarkeit kann beispielsweise durch eine Spielpassung und der Materialpaarung von Aluminium für die Rotationswelle und glasfaserverstärktes Polyamid für die Blende erreicht werden. Alternativ bietet es sich bei Kunststoffblenden an, diese zwischen Rotationsachse und den Dichtflächen mit einem oder mehreren Bandscharnieren zu versehen. Durch die axiale Beweglichkeit kann sich die Blende optimiert an die Dichtfläche anlegen, wodurch die Dichtheit der Ventilanordnung ohne zusätzliche Mechanik verbessert wird. Eine weitere Gestaltung sieht vor, den Rotationswinkel durch Mittel in Zusammenwirkung mit der Rotationsachse zu begrenzen. Dazu können an der Rotationsachse oder an einer Mechanik, die mit der Rotationsachse verbunden ist, Konturen angeordnet sein, die in ihrer Drehbewegung durch ein Anschlagmittel begrenzt werden. Als Anschlagmittel oder Konturen können beispielsweise Stifte, Scheiben oder Gehäusekante dienen. Durch diese Maßnahme wird die Blende in vorteilhafter Weise entlastet und kann entsprechend leicht und dünnwandig gestaltet werden.

Weitere positive Auswirkungen werden erreicht, wenn die Blende in ihren Abmessungen auf den Strömungsquerschnitt angepasst wird. Dabei ist es generell möglich als Dichtfläche die Wandungsdicke des Strömungsquerschnittes zu verwenden. Hierdurch kann der Querschnitt der Blende minimiert werden, wodurch sich auch der notwendige Rotationswinkel und der Bauraum des Gehäuses reduzieren lässt. Die Abdichtung kann jedoch auch in einem Bereich erfolgen, der sich außerhalb des Strömungsquerschnittes erstreckt.

Zur weiteren Optimierung wird in einer besonderen Ausgestaltung ein Dichtmittel verwendet, welches eine axiale Elastizität aufweist. Möglich wird dies vorzugsweise durch Elastomerdichtungen mit einer geringen Härte und einem relativ schlanken Querschnitt. Alternativ oder ergänzend können beispielsweise auch mehrere Dichtringe mit unterschiedlicher Elastizität übereinander angeordnet sein. Die Elastizität kann auch durch Federelemente erreicht werden, welche zwischen den Dichtringen oder zwischen einem Nutgrund und einem Dichtring angeordnet sind. Hierdurch wird die Lageposition der Dichtfläche zwischen Blende und Gehäuse angepasst, wodurch ein sicherer und dichter Verschluss erreicht wird.

Gemäß einer weiteren Variante wird ein Elastomerdichtring in seinem Querschnitt der Gestalt geformt, dass er eine starre Trägerzone und wenigstens eine elastische Auflagefläche aufweist. Dazu können beispielsweise runde, ovale oder trapezförmige Querschnitte verwendet werden. Vorteilhaft wird dadurch die Berührung der Dichtflächen optimiert, wobei eine notwendige Starrheit des Dichtringes gewährleistet bleibt.

In einem modifizierten Ausführungsbeispiel sind an der Blende Einbuchtungen angeformt, die einen Schmutzsammelraum bilden oder vergrößern. Diese Ausbuchtungen sind dazu im äußeren Randbereich der Blende in Form eines Absatzes an der Oberfläche oder eine Aussperrung über die ganze Materialdicke der Blende angeordnet. Idealerweise sind diese bogenförmig ausgebildet und gewährleisten im geöffneten Zustand des Strömungsquerschnittes ein definiertes Sammeln des Schmutzes. Der sich anlagernde Schmutz kann somit aus dem Ventilraum entweichen, wodurch die zuverlässige Funktionsfähigkeit erhalten bleibt.

### Kurze Beschreibung der Zeichnungen

Ausführungsbeispiele der Erfindung werden nachfolgend anhand von schematischen Darstellungen erläutert, hierbei zeigt

Figur 1 eine Außenansicht der erfindungsgemäßen Ventileinheit,

Figur 2 einen Vollschnitt der Ventileinheit gemäß Figur 1 Schnitt AA und

Figur 3 zwei alternative Dichtungsvarianten gemäß dem Ausschnitt X der Figur 2.

### Ausführungsform(en) der Erfindung

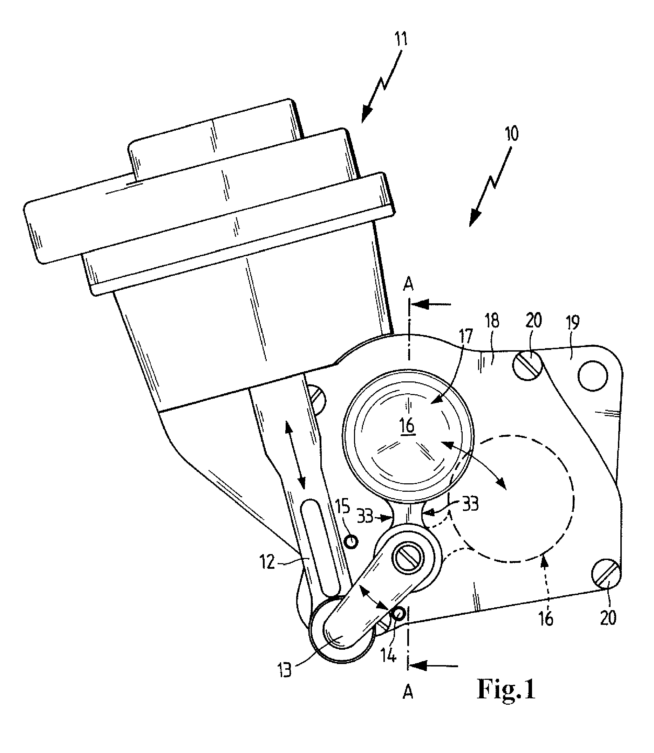

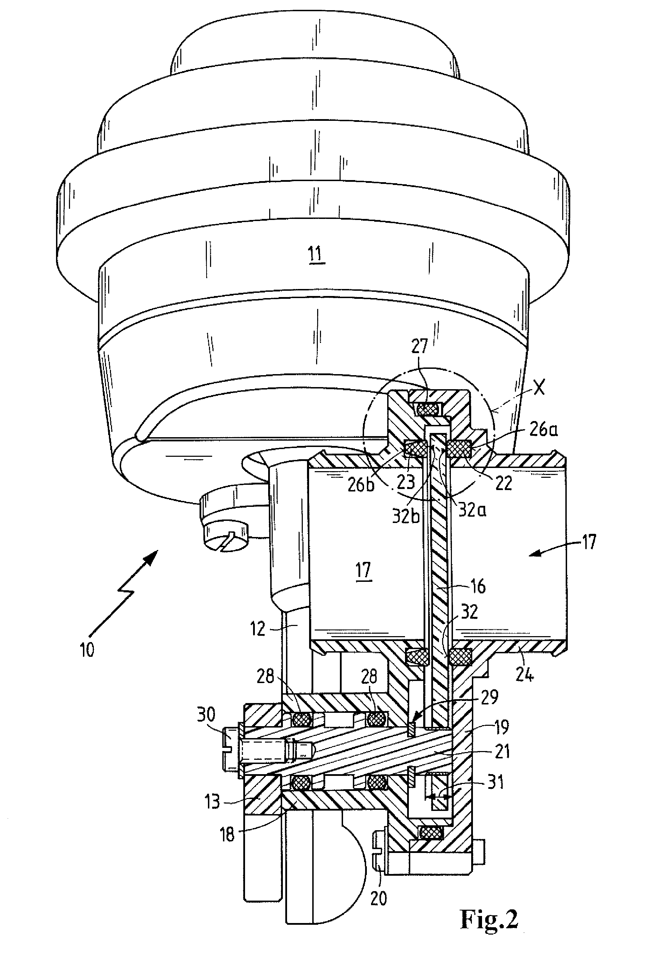

In Figur 1 ist eine Ventileinheit 10 in befestigter Verbindung mit einer Antriebseinheit 11 dargestellt. Im gezeigten Beispiel ist die Antriebseinheit 11 ein membrangesteuerter Unterdruckantrieb. Dieser kann jedoch beispielsweise durch einen elektrischen Stellmotor ersetzt werden. Eine von der Antriebseinheit 11 ausgehende Linearbewegung wird durch eine Schubstange 12 auf einen Hebel 13 übertragen. Der Hebel 13 ist mit einer Rotationsachse 21 (Figur 2) rotationsfest verbunden und bewegt sich über einen Rotationswinkel zwischen einem ersten Anschlag 14 und einem zweiten Anschlag 15. Dadurch ist eine Blende 16 schwenkbar, wodurch ein Strömungsquerschnitt 17 geöffnet oder verschlossen werden kann. Im dargestellten Zustand ist die Blende 16 in den Strömungsquerschnitt 17 eingeschwenkt. Die Ventileinheit 10 ist innerhalb einer ersten Gehäusehälfte 18 und einer zweiten Gehäusehälfte 19 angeordnet, wobei die Gehäusehälften 18, 19 durch die Schrauben 20 miteinander befestigt sind. An den Gehäusehälften 18, 19 sind auch Mittel zur Befestigung der Antriebseinheit 11 vorgesehen. Im ausgeschwenkten Zustand (als unsichtbare Linie dargestellt) ist die Blende 16 vollkommen außerhalb des Strömungsquerschnittes 17. An der Blende 16 angeordnete Einbuchtungen 33 gewährleisten ein Absondern möglicher Schmutzpartikel aus dem Strömungsquerschnitt 17.

Figur 2 zeigt im Vollschnitt die in der Ventileinheit 10 angeordnete Mechanik. Der Figur 1 entsprechende Bauteile sind mit denselben Bezugszeichen versehen. Durch die Antriebseinheit 11 wird die Antriebsbewegung über die Schubstange 12 und den Hebel 13 auf die Rotationsachse 21 übertragen. Die Rotationsachse 21 ist innerhalb der Gehäusehälften 18, 19 drehbar gelagert und durch eine Sicherungsscheibe 29 und eine Sicherungsschraube 30 in ihrer axialen Position fixiert. Durch die Wellendichtringe 28 erfolgt eine Abdichtung der Rotationsachse 21 gegenüber der Umgebungsseite der Ventileinheit 10. Die beiden Gehäusehälften 18, 19 sind durch mehrere Schrauben 20 aneinander gespannt und werden durch einen Gehäusedichtring 27 zur Umgebungsseite hin dichtend miteinander verbunden. In beiden Gehäusehälften 18, 19 sind gegenüberliegende Nuten 26 a, 26 b eingeformt. Die Blende 16 ist auf der Rotationswelle 21 rotationsfest aber axial verschiebbar gelagert. Diese axiale Verschiebbarkeit kann über einen Verschiebebereich 31 beispielsweise über eine axiale, rillenförmige Kontur gewährleistet werden. In der gezeigten Stellung ist die Blende 16 in den Strömungsquerschnitt 17 eingeschwenkt und auf der Seite der zweiten Gehäusehälfte 19 mit einem Rechteckring 22 in Berührung, wodurch sich zwischen Blende 16 und Rechteckring 22 eine Dichtfläche 32 a bildet. Auf der gegenüberliegenden ersten Gehäusehälfte 18 ist in einer Nut 26 b ein Trapezring 23 eingebettet, der einen trapezförmigen Querschnitt aufweist und dadurch am Nutgrund eine schmälere Auflagefläche bildet. Dadurch erhöht sich die Elastizität des Trapezringes 23 in axialer Richtung, wodurch sich die Blende 16 im Bereich der Dichtfläche 32a besser anlegt und mögliche Toleranzen besser überbrückt werden können. Im Strömungsquerschnitt 17 besteht bei geschlossener Blende 16 zwischen der ersten Gehäuseseite 18 und der zweiten Gehäuseseite 19 eine Druckdifferenz. Bedingt durch die axiale Verschiebbarkeit der Blende 16 legt sich diese an den Dichtring 22, 23 an die jeweilige Seite mit dem minderen Druckniveau an. Je höher die existierende Druckdifferenz ist, desto größer ist der Druck auf die jeweiligen Dichtflächen 32 a bzw. 32 b, wodurch sich eine mögliche Leckage bei steigender Druckdifferenz minimiert.

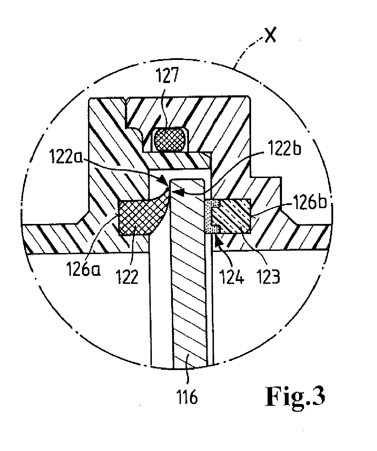

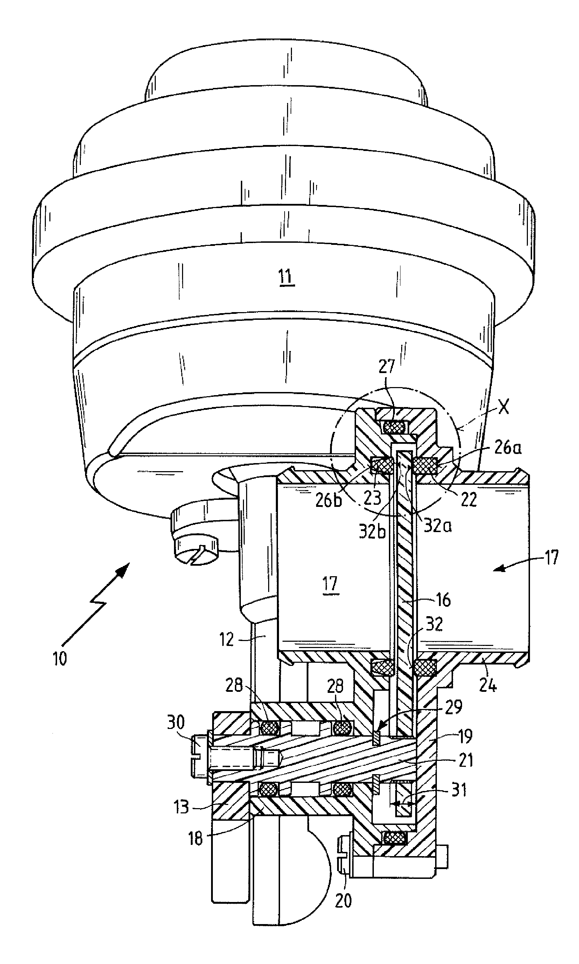

Figur 3 zeigt den Bereich im Ausschnitt X gemäß der Figur 2 mit einer modifizierten Dichtvariante. In der Nut 126 a ist ein Formdichtring 122 angeordnet, an dem eine tropfenförmige Dichtkante 122 a und eine Dichtschulter 122 b radial nach außen ragen. Die Dichtkante 122 a vermindert den Reibungswiderstand beim Einschwenken der Blende 116. Der Formdichtring 122 ist aus einem Elastomer gebildet, wodurch sich die Blende 116 in gegen den Formdichtring 122 gedrückter Position (nicht dargestellt) an die Dichtschulter 122 b anlegt. In der gegenüberliegenden Nut 126 b ist ein Elastomerdichtring 123 mit einem Teflonring 124 kombiniert. Die beiden Dichtringe 123, 124 sind durch ihre Außenkontur formschlüssig miteinander im Eingriff. Der Teflonring 124 minimiert den Reibungswiderstand gegenüber der Blende 116 und der Elastomerdichtring 123 gewährleistet die notwendige Elastizität.

## Patentansprüche

1. Ventileinheit zum Verschließen eines Strömungsquerschnittes, insbesondere eines Sekundärluftladers, aufweisend eine Gehäuseanordnung, in welcher der Strömungsquerschnitt durch eine schwenkbare Blende verschließbar ist, eine Rotationsachse, welche annähernd parallel zum Strömungsquerschnitt in der Gehäuseanordnung angeordnet ist, wobei die Rotationsachse Mittel zur Verbindung mit einer Antriebseinheit aufweist, wobei die schwenkbare Blende mit der Rotationsachse verbunden ist, derart, dass die Blende durch die Rotation der Rotationsachse über den Strömungsquerschnitt geschwenkt wird und diesen verschließt, **dadurch gekennzeichnet, dass** im Bereich des Strömungsquerschnittes wenigstens ein Dichtmittel angeordnet ist, welches mit der Blende derart korrespondiert, dass das Dichtmittel in einem geschlossenen Zustand der Ventileinheit in Berührung mit einer Seite der Blende ist, wodurch eine Dichtfläche entsteht.

2. Ventileinheit nach Anspruch 1, **dadurch gekennzeichnet, dass** im Bereich des Strömungsquerschnittes ein zweites Dichtmittel angeordnet ist, derart, dass das zweite Dichtmittel in Abhängigkeit einer im Strömungsquerschnitt vorhandenen Strömungsrichtung mit einer zweiten Seite der Blende korrespondiert.

3. Ventileinheit nach einem der vorhergehenden Ansprüche, **dadurch gekennzeichnet, dass** das Dichtmittel ein Dichtring ist.

4. Ventileinheit nach einem der vorhergehenden Ansprüche, **dadurch gekennzeichnet, dass** das Dichtmittel konzentrisch zum Strömungsquerschnitt in einer Axialnut angeordnet ist.

5. Ventileinheit nach einem der vorhergehenden Ansprüche, **dadurch gekennzeichnet, dass** das Dichtmittel und / oder die Blende an ihren Dichtflächen eine Beschichtung mit vermindertem Reibwert aufweisen.

6. Ventileinheit nach einem der vorhergehenden Ansprüche, **dadurch gekennzeichnet, dass** die Blende im Strömungsquerschnitt eine axiale, im Wesentlichen parallel zur Rotationsachse gerichtete Beweglichkeit aufweist.

7. Ventileinheit nach einem der vorhergehenden Ansprüche, **dadurch gekennzeichnet, dass** der Rotationswinkel der Rotationsachse durch Mittel zwischen einem Gehäuseteil und der Rotationsachse begrenzt ist.

8. Ventileinheit nach einem der vorhergehenden Ansprüche, **dadurch gekennzeichnet, dass** die Blende den Strömungsquerschnitt in geschlossenem Zustand nicht wesentlich überragt.

9. Ventileinheit nach einem der vorhergehenden Ansprüche, **dadurch gekennzeichnet, dass** das Dichtmittel in Strömungsrichtung eine Elastizität aufweist.

10. Ventileinheit nach einem der vorhergehenden Ansprüche, **dadurch gekennzeichnet, dass** das Dichtmittel einen Querschnitt aufweist, welcher sich von der Blende ausgehend verjüngt.

11. Ventileinheit nach einem der vorhergehenden Ansprüche, **dadurch gekennzeichnet, dass** an der Blende Einbuchtungen angeordnet sind, welche außerhalb der Dichtfläche einen Raum für Schmutzablagerungen bilden.
